# EUROPEAN PATENT SPECIFICATION

(11) **EP 2 822 328 B1**
(45) Date of publication and mention of the grant of the patent: **03.10.2018**
(21) Application number: 13305949.3
(22) Date of filing: 04.07.2013
(51) Int. Cl.: H04W 48/12, H04W 4/70

(54) **Apparatuses, methods, and computer programs for a mobile transceiver and for a base station transceiver**
Vorrichtungen, Verfahren und Computerprogramme für einen mobilen Sender-Empfänger und für einen Basisstations-Sender-Empfänger
Procédés, appareils et programmes informatiques pour un émetteur/récepteur mobile et pour un émetteur/récepteur de station de base

(43) Date of publication of application: 07.01.2015
(73) Proprietor: Alcatel Lucent, 91620 Nozay (FR)
(72) Inventor: Braun, Volker, 70435 Stuttgart (DE); Andre, Fonseca dos Santos, 70345 Stuttgart (DE)
(74) Representative: Berthier, Karine

(56) References cited:
- WO-A1-2012/104635
- WO-A2-2012/005494
- GB-A- 2 497 743
- US-A1- 2012 231 828
- US-A1- 2013 083 653
- US-A1- 2013 083 753
- LG ELECTRONICS: "Standards aspects for low-cost MTC", 3GPP DRAFT; R1-113994 MTC STANDARDS ASPECTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20111114 - 20111118, 8 November 2011 (2011-11-08), XP050562033, [retrieved on 2011-11-08]
- INTERDIGITAL COMMUNICATIONS ET AL: "Standardization aspects for low-cost MTC devices in LTE", 3GPP DRAFT; R1-113934, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, US; 20111114 - 20111118, 8 November 2011 (2011-11-08), XP050561986, [retrieved on 2011-11-08]
- PANTECH: "On the reduction of baseband complexity for low cost MTC", 3GPP DRAFT; R1-113113, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538254, [retrieved on 2011-10-04]

## Description

Embodiments of the present invention relate to communication networks, more particularly but not exclusively to communication using different frequency resource of a communication system.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing.

While a common trend is towards systems and devices with higher capacities, bandwidth and complexity, other applications arise, which may have lower data demands but may depend on cost efficient implementations. Among them is the so-called Machine-to-Machine (M2M), Massive Machine Communication (MMC), or Machine-Type Communication (MTC) which may be considered an important revenue stream with high potential for operators of mobile communication systems. Some development efforts are directed to access schemes for such communication, which can be also referred to as reduced bandwidth communications, as principally any low rate device could be used for such applications, e.g. also a mobile phone using reduced data rate. One way forward to enable reduced bandwidth would be using the already deployed communication infrastructure, such as cellular or mobile communication systems.

For example, deployment of a large number of MTC transceivers could be envisioned, e.g. for collecting all kinds of data such as meter or sensor data, and infrequent communication or transmission of small amounts of data could be expected. More details on MTC can be found in 3rd Generation Partnership Project (3GPP), Technical Specification Group (TSG) Radio Access Network (RAN), Study on provision of low-cost Machine-Type Communications (MTC) User Equipments (UEs) based on Long Term Evolution (LTE), 3GPP Technical Recommendation (TR) 36.888, which captures various features and their modifications to reduce cost and improve coverage along with various hardware simplifications that would enable production of low-cost MTC UE's. According to 3GPP TR 36.888 (Release 11, V2.0.0, 2012-06) the reduction of DownLink (DL) BandWidth (BW) for baseband and Radio Frequency (RF) may reduce the overall cost of the MMC device by about 28%, cf. Table 7.1 therein. Moreover, 3GPP TSG RAN Working Group (WG) 1 R1-120510 discusses some options for support of reduced maximum bandwidth for low-cost MTC UEs in an LTE system.

Document GB 2 497 743 A relates to a method for communicating data between a base station and a terminal device in a wireless telecommunications system, for example an LTE-based system. The wireless communication system uses a plurality of frequency sub-carriers spanning a system frequency band. Physical-layer control information for the terminal device is transmitted from the base station using sub-carriers selected from across the system frequency band, for example to provide frequency diversity. However, higher-layer data for the terminal device is transmitted using only sub-carriers selected from within a restricted frequency band, which is smaller than and within the system frequency band.

Document WO 2012/005494 A2 discloses MTC devices functioning in a LTE environment within a MTC-dedicated subframe. It discloses the possibility of accessing the LTE system through the normal procedure (receiving the P/S-SCH and PBCH) and then switching to a MTC-dedicated channel where the data and reference signals are received. It addresses the provision of information to the MTC devices with respect to additional system information or a change of MTC control information.

### Summary

The invention is set out in the appended set of claims. The embodiments and/or examples of the following description which are not covered by the appended claims are considered as not being part of the present invention.

Embodiments are based on the finding that there is a desire to enable low cost devices for MMC over a broadband mobile communication system such as, for example, LTE. This may motivate the design of signaling schemes enabling DL transmission for MMC with limited BW. It is a further finding that in LTE Release (Rel) 8, an MMC device uses the full system BW. A small system BW can be configured, e.g. 1.4MHz, however this may be inefficient due to guard bands and it may reduce peak/average data rates of broadband users. According to another finding, an adaptation of the LTE control signaling, e.g. by using the principles of the enhanced Physical Downlink Control CHannel (ePDCCH) control signaling similar as defined in LTE-Advanced (LTE-A), the MMC device may be allocated an inner part of the system BW, e.g. the inner 1.4MHz part. In this case, all MMC traffic may be carried in this inner BW part and may not be distributed over the full system BW. LTE synchronization signals and broadcast channel are transmitted in this inner BW part. Using only the inner BW may therefore lead to constrained capacity for MMC traffic.

Embodiments are based on the finding that an MMC device or any reduced bandwidth transceiver may perform acquisition and actual data reception on separate BW chunks or frequency resources. In the following description an MMC device may represent a transceiver or a mobile transceiver with reduced bandwidth communication or a transceiver communicating MMC, MTC or M2M data. Embodiments may implement the utilization of separate or different frequency resources for acquisition and data transmission using a process with multiple stages. In some embodiments two stages may be used. In a first stage, the MMC device may perform cell search and DL synchronization, and system parameters may be read which are transmitted on a broadcast channel or as a system information broadcast. Data transmission in the uplink and/or in the downlink may also be carried out during the first stage. The MMC device may further receive information about the DL spectrum part allocated for MMC traffic, e.g. by means of user specific signaling or by means of system information. The first stage may use a first chunk of the system BW or a first frequency resource, e.g. the inner BW part in an embodiment using LTE. In a second stage, the MMC device may adapt its RF receiver chain to the second BW chunk or frequency resource, where the actual data transmission takes place. The second BW chunk or frequency resource may carry all relevant signals that allow the MMC device to receive data and control information, such as DL pilots and control channels.

Embodiments provide an apparatus for a mobile transceiver, which is also referred to as mobile transceiver apparatus. That is to say the apparatus may be comprised or included in a mobile transceiver; the apparatus may be adapted to or operable in a mobile transceiver. Embodiments also provide a mobile transceiver comprising the mobile transceiver apparatus. The mobile transceiver apparatus is operable to receive data from a base station transceiver of a mobile communication system.

The mobile communication system may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

The mobile transceiver apparatus comprises a receiver module operable to receive radio signals from the base station transceiver. The receiver module may correspond to one or more receiver devices, one or more receive units, any means for receiving, etc. In embodiments the receiver module may comprise typical receiver components. Such components may comprise one or more receive antennas, a Low Noise Amplifier (LNA), one or more filters, a mixer, a converter, etc. The mobile transceiver apparatus further comprises a control module operable to control the receiver module. The control module may correspond to one or more control devices, one or more control units, means for controlling, etc. In embodiments the control module may be implemented in software or as a computer program which can be executed on accordingly adapted hardware, such as a processor, a Digital Signal Processor (DSP), a multi-purpose processor, etc.

The control module of the mobile transceiver apparatus is operable to configure the receiver module to receive a system parameter of the mobile communication system and a synchronization signal on a first frequency resource. The control module is further operable to configure the receiver module to receive a data signal and a reference signal on a second frequency resource and the control module is operable to control the receiver module to receive signals on the first frequency resource discontinuously. That is to say, that after acquisition of the mobile transceiver using the first frequency resource, the second frequency resource can be used for data transmission and the reception of the first frequency resource can at least temporarily be stopped or even switched off Hence, the receiver module can be tuned or configured to the second frequency resource after acquisition and therefore a single receiver module with a reduced bandwidth compared to the system bandwidth may be used. The reference signal provided on the second frequency resource may correspond to synchronization, reference or pilot symbols, which may enable the mobile transceiver apparatus to maintain synchronization and/or to carry out channel estimation of the radio channel between the base station transceiver and the mobile transceiver. The data signal may correspond to a signal carrying payload or higher layer control or payload data. Therefore, embodiments may provide a mobile transceiver apparatus with reduced bandwidth and high cost efficiency, for example, for MMC. In other words, embodiments may reduce the cost of MMC devices, while carrying broadband data and MMC traffic over the same broadband mobile communications system. Embodiments may enable high capacity for MMC DL traffic, they may enable a widespread use of sensors and actuators in applications like smart cities, connected homes or m-health, while keeping the overhead for system information broadcast low, i.e. they may only be needed in the first BW chunk.

In some embodiments the control module of the mobile transceiver is operable to receive, on the second frequency resource, information related to control data to be transmitted on the first frequency resource. Hence after being configured to receive signals on the second frequency resource an indication may be received on the second frequency resource to return to the first frequency resource, e.g. temporarily or for reception of any updated control or system information. The control module may then be operable to configure the receiver module to receive the control data on the first frequency resource.

Embodiments further provide an apparatus for a base station transceiver, which is also referred to as base station transceiver apparatus. That is to say the apparatus may be comprised or included in a base station transceiver; the apparatus may be adapted to or operable in a base station transceiver. Embodiments also provide a base station transceiver comprising the base station transceiver apparatus. The base station transceiver apparatus is operable to transmit data from the base station transceiver to a mobile transceiver of the mobile communication system. The base station apparatus comprises a transmitter module operable to transmit radio signals from the base station transceiver to the mobile transceiver. The transmitter module may correspond to one or more transmitter devices, one or more transmit units, any means for transmitting, etc. In embodiments the transmitter module may comprise typical transmitter components. Such components may comprise one or more transmit antennas, a Power Amplifier (PA), one or more filters, a mixer, a converter, etc.

The base station transceiver apparatus further comprises a control module operable to control the transmitter module. The control module may correspond to one or more control devices, one or more control units, means for controlling, etc. In embodiments the control module may be implemented in software or as a computer program which can be executed on accordingly adapted hardware, such as a processor, a DSP, a multi-purpose processor, etc. In line with what is described above with respect to the mobile transceiver apparatus, the control module of the base station transceiver apparatus is operable to configure the transmitter module to transmit a system parameter of the mobile communication system and a synchronization signal for the mobile transceiver on a first frequency resource. The control module is further operable to configure the transmitter module to transmit data and a dedicated control signal for the mobile transceiver on a second frequency resource such that data transmission to the mobile transceiver can be maintained without the first frequency resource. The control module is operable to transmit, on the second frequency resource, information related to control data to be transmitted on the first frequency resource. In other words, an indication for the mobile transceiver to return to receiving signals transmitted on the first frequency resource may be transmitted on the second frequency resource. The control module is further operable to configure the transmitter module to then transmit the control data on the first frequency resource. The dedicated control data comprises the reference or synchronization data for the reference or pilot signal as described above and it comprises the information related to control data to be transmitted on the first frequency resource.

In further embodiments the mobile transceiver apparatus may further comprise a transmitter module. The transmitter module may correspond to one or more transmitter devices, one or more transmit units, any means for transmitting, etc. In embodiments the transmitter module may comprise typical transmitter components. Such components may comprise one or more transmit antennas, a Power Amplifier (PA), one or more filters, a mixer, a converter, etc. The control module may then be operable to provide information on a frequency resource it is synchronized to, using the transmitter module, to the base station transceiver. The transmitter module of the mobile transceiver apparatus may be further adapted to transmit data to the base station transceiver using a reduced bandwidth compared to the system bandwidth. In other words, the transmitter module may be operable to transmit data to the base station transceiver using a frequency resource with a bandwidth less than the system bandwidth, which may result in further cost reduction in some embodiments. The present description may be focused on downlink aspects of transmission. However, the considerations may equally be applied to uplink transmission in embodiments.

Correspondingly, the base station transceiver apparatus may further comprise a receiver module. The receiver module may correspond to one or more receiver devices, one or more receive units, any means for receiving, etc. In embodiments the receiver module may comprise typical receiver components. Such components may comprise one or more receive antennas, an LNA, one or more filters, a mixer, a converter, etc. The control module of the base station transceiver apparatus may control the receiver module and it may be operable to receive information on a frequency resource the mobile transceiver is synchronized to from the mobile transceiver using the receiver module. The receiver module of the base station transceiver apparatus may be further adapted to receive data from the mobile station transceiver using a reduced bandwidth compared to the system bandwidth. In other words, the receiver module may be operable to receive data from the mobile transceiver using a frequency resource with a bandwidth less than the system bandwidth, which may result in further cost reduction in some embodiments. The present description may be focused on downlink aspects of transmission. However, the considerations may equally be applied to uplink transmission in embodiments.

In further embodiments the first frequency resource and the second frequency resource may correspond to different sub-bands of a system bandwidth of the mobile communication system. For example, the mobile communication system may be an OFDM system having a plurality of sub-carriers which may be used to form a plurality of sub-bands where each of which may comprise one or more of the sub-carriers. In some embodiments, the first frequency resource may comprise a higher bandwidth than the second frequency resource, for example, there may be a higher number of sub-carriers in the first frequency resource than in the second frequency resource. For example, in some embodiments the same power levels may be used on the first and the second frequency resource. As the second chunk or frequency resource has the same power level, i.e. spectral power density, but with less BW, embodiments may then reduce the overall power and may improve a battery consumption of the mobile transceiver.

In other embodiments the first frequency resource may as well comprise a lower or an equal bandwidth as the second frequency resource. In some embodiments the first frequency resource may be centered on a carrier frequency of the base station transceiver. That is to say in some embodiments the first frequency resource may correspond to an inner band of a system bandwidth, i.e. it may lie in the center of the system bandwidth. Correspondingly, the second frequency resource may be located off-center in the system bandwidth. Embodiments may provide the advantage, that the receiver module of the mobile transceiver apparatus may be designed for a bandwidth corresponding to the inner bandwidth. After acquisition the receiver module may be configured or tuned to the second frequency resource or sub-band for data reception/transmission.

For example, the control module of the mobile transceiver apparatus may be operable to perform cell search and downlink synchronization using signals received on the first frequency resource. In some embodiments the control module is operable to obtain data communicated on a broadcast channel or a system information broadcast of the mobile communication system using signals received on the first frequency resource. In further embodiments the control module of the mobile transceiver can be operable to receive information related to the second frequency resource using the first frequency resource. Correspondingly, the control module of the base station transceiver apparatus may be operable to transmit information related to the second frequency resource using the first frequency resource.

That is to say, information on which actual frequency resource to use for the data transmission may be communicated by the base station transceiver apparatus on the first frequency resource. In embodiments the control module may be operable to stop the receiver module from receiving signals on the first frequency resource after synchronization with the base station transceiver is achieved. For example, the receiver module of the mobile transceiver apparatus may be stopped from receiving signals on the first frequency resource and tuned or configured to receive signals on the second frequency resource.

Moreover, the control module of the mobile transceiver apparatus may be operable to achieve synchronization with the base station transceiver using the first frequency resource, and the control module may be operable to maintain synchronization using signals received on the first or the second frequency resource. Hence, the base station transceiver apparatus or the control module therein may be operable to provide according information that allows maintaining synchronization on the second frequency resource.

In further embodiments the receiver module of the mobile transceiver may be operable to receive an orthogonally frequency division multiplexed radio signal from the base station transceiver. The control module of the mobile transceiver may then be operable to apply a frequency transformation to the radio signal, wherein a range of the frequency transformation is reduced when receiving a signal on the second frequency resource as compared to a signal received on the first frequency resource. Some embodiments may enable a cost reduction if the BWs of first and second frequency resources are below the system BW. For example, (Inverse) Fast Fourier Transform ((I)FFT) may be used in embodiments for transforming signals between the time and frequency domain. When a bandwidth, i.e. the number of subcarriers is reduced, then an (I)FFT with smaller dimension can be used. Embodiments may provide an advantage with respect to computational complexity and battery lifetime when the processing efforts for the second frequency resource can be reduced.

Embodiments further provide a method for a mobile transceiver which is operable to receive data from a base station transceiver of a mobile communication system. The method comprises receiving radio signals from the base station transceiver and controlling to receive a system parameter of the mobile communication system and a synchronization signal on a first frequency resource and to receive a data signal and a reference signal on a second frequency resource. The method further comprises controlling to receive signals on the first frequency resource discontinuously.

Embodiments further provide a method for a base station transceiver operable to transmit data from the base station transceiver to a mobile transceiver of a mobile communication system. The method comprises transmitting radio signals from the base station transceiver to the mobile transceiver, an controlling to transmit a system parameter of the mobile communication system and a synchronization signal for the mobile transceiver on a first frequency resource and to transmit data and a dedicated control signal for the mobile transceiver on a second frequency resource such that data transmission to the mobile transceiver can be maintained without the first frequency resource. The method further comprises controlling to transmit, on the second frequency resource, information related to control data to be transmitted on the first frequency resource, and to transmit the control data on the first frequency resource.

Embodiments further provide a computer program having a program code for performing one of the above described methods when the computer program is executed on a computer, processor, or programmable hardware.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates an embodiment of an apparatus for a mobile transceiver and an embodiment of an apparatus for a base station transceiver;
Fig. 2 illustrates frequency resources utilized in an embodiment;
Fig. 3 shows a block diagram of a flow chart of an embodiment of a method for a mobile transceiver; and
Fig. 4 shows a block diagram of a flow chart of an embodiment of a method for a base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications falling within the scope of the appended claims. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.,* "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

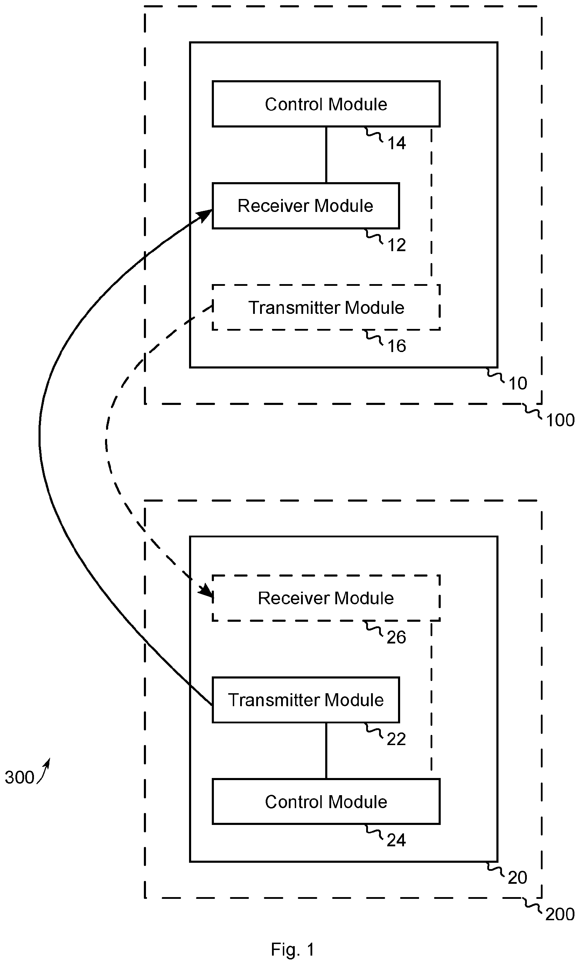

Optional components in the following figures are shown using dashed or dotted lines. Fig. 1 depicts an embodiment of an apparatus 10 for a mobile transceiver 100. The apparatus 10 is operable to receive data from a base station transceiver 200 of a mobile communication system 300. The mobile transceiver apparatus 10 comprises a receiver module 12 operable to receive radio signals from the base station transceiver 200. The receiver module 12 is coupled to a control module 14 which is also comprised in the mobile transceiver apparatus 10. The control module 14 is operable to control the receiver module 12. The control module 14 is operable to configure the receiver module 12 to receive a system parameter of the mobile communication system 300 and a synchronization signal on a first frequency resource from the base station transceiver 200. Signal reception is indicated in Fig. 1 by the arrow pointing from a transmitter module 22 of the base station transceiver apparatus 20 to the receiver module 12 of the mobile transceiver 10. The control module 14 is operable to configure the receiver module 12 to receive a data signal and a reference signal on a second frequency resource. The control module 14 further is operable to control the receiver module 12 to receive signals on the first frequency resource discontinuously. Fig. 1 further illustrates a mobile transceiver 100 comprising the mobile transceiver apparatus 10.

In a further embodiment the control module 14 is operable to receive, on the second frequency resource, information related to control data to be transmitted on the first frequency resource. The control module 14 is then operable to configure the receiver module 12 to receive the control data on the first frequency resource. Fig. 1 further illustrates an embodiment in which the mobile transceiver apparatus 10 further comprises an optional transmitter module 16, which is coupled to the control module 14. The control module 14 is operable to provide information on a frequency resource it is synchronized to, using the transmitter module 16, to the base station transceiver 200. In some embodiments an MMC device as mobile transceiver may signal to the network to which BandWidth (BW) chunk or frequency resource it is synchronized, e.g. if the MMC device may fall back to the first BW chunk autonomously, e.g. in case of sync mismatch. In the embodiment of the mobile transceiver apparatus the transmitter module 16 is further adapted to transmit data to the base station transceiver 200 using a reduced bandwidth compared to the system bandwidth. In other words, the transmitter module 16 is operable to transmit data to the base station transceiver 200 using a frequency resource with a bandwidth less than the system bandwidth.

As mentioned above, Fig. 1 further depicts an apparatus 20 for the base station transceiver 200 which is operable to transmit data from the base station transceiver 200 to the mobile transceiver 100 of the mobile communication system 300, which is indicated by the solid line arrow. Fig.1 illustrates an embodiment of the base station transceiver 200 comprising the base station transceiver apparatus 20. The base station transceiver apparatus 20 comprises a transmitter module 22 operable to transmit radio signals from the base station transceiver 200 to the mobile transceiver 100. The transmitter module 22 is coupled to a control module 24 comprised in the base station transceiver apparatus 20.

The control module 24 of the base station transceiver apparatus 20 is operable to control the transmitter module 22. The control module 24 is operable to configure the transmitter module 22 to transmit a system parameter of the mobile communication system 300 and a synchronization signal for the mobile transceiver 100 on the first frequency resource. The control module 24 is further operable to configure the transmitter module 22 to transmit data and a dedicated control signal for the mobile transceiver 100 on the second frequency resource such that data transmission to the mobile transceiver 100 can be maintained without using the first frequency resource at least temporarily. The control module 24 is operable to transmit, on the second frequency resource, information related to control data to be transmitted on the first frequency resource, and the control module 24 is operable to configure the transmitter module 22 to transmit the control data on the first frequency resource.

Fig. 1 further illustrates an optional receiver module 26 comprised in the base station transceiver apparatus 20, which is coupled to the control module 24. The control module 24 is operable to receive information on a frequency resource the mobile transceiver 100 is synchronized to from the mobile transceiver 100 using the receiver module 26, which is indicated by the dashed arrow in Fig. 1. The receiver module 26 of the base station transceiver apparatus 20 is further adapted to receive data from the mobile station transceiver 100 using a reduced bandwidth compared to the system bandwidth. In other words, the receiver module 26 is operable to receive data from the mobile transceiver 100 using a frequency resource with a bandwidth less than the system bandwidth.

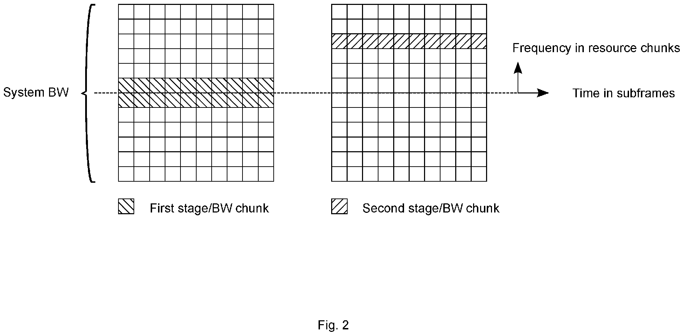

In the following embodiments will be described which are operable in an LTE or OFDM communication network 300. That is to say that the respective receiver and transmitter modules 12, 22, 16, 26 are adapted or configured to operate in an LTE or OFDM system. Frequency resources utilized in such an embodiment are exemplified in Fig. 2. Fig. 2 shows two time-frequency grids in which time resources in terms of sub-frames are depicted towards the right and frequency resources in terms of resource chunks, i.e. a group of one or more sub-carriers, to the top. The top-bottom area in the frequency domain illustrates the full system bandwidth which is sub-divided into 12 frequency resources or sub-bands which are further sub-divided into 10 sub-frames in the time domain. It is to be noted that the sub-division shown in Fig. 2 is an example in an embodiment; other embodiments may use other subdivisions or other granularities in either of the domains.

Fig. 2 shows on the left a first stage with the first BW chunk or first frequency resource which is used for acquisition of the mobile transceiver 100 to the system via the base station transceiver 200. The first BW chunk is centered around zero frequency as with LTE. Fig. 2 shows on the right a second stage with the second BW chunk or frequency resource used for actual DL data transmission. Moreover, the mobile transceiver 100 is assumed to be an MMC device. The second BW chunk lies on the same component carrier but allocates less BW than the first BW chunk. In the embodiment shown in Fig. 2 the first frequency resource and the second frequency resource correspond to different sub-bands of the system bandwidth of the mobile communication system 300. The first frequency resource comprises a higher bandwidth than the second frequency resource. The first frequency resource is centered on a carrier frequency of the base station transceiver 200.

In another embodiment the control module 14 of the mobile transceiver apparatus 10 is operable to perform cell search and downlink synchronization using signals received on the first frequency resource. The control module 14 may be operable to obtain data communicated on a broadcast channel or a system information broadcast of the mobile communication system 300 using signals received on the first frequency resource. In yet another embodiment the control module 14 of the mobile transceiver apparatus 10 is operable to receive information related to the second frequency resource using the first frequency resource. Hence the particular second frequency resource or BW chunk on the right hand side of Fig. 2 may be assigned by the base station transceiver apparatus 20. Correspondingly, the control module 24 of the base station transceiver apparatus 20 is operable to transmit information related to the second frequency resource using the first frequency resource.

In an embodiment the control module 14 of the mobile transceiver apparatus 10 is operable to stop the receiver module 12 from receiving signals on the first frequency resource after synchronization with the base station transceiver 200 is achieved. In a further embodiment the control module 14 of the mobile transceiver apparatus 10 is operable to achieve synchronization with the base station transceiver 200 using the first frequency resource and the control module 14 is operable to maintain synchronization using signals received on the first or the second frequency resource. In other words, in embodiments the MMC device may maintain DL synchronization. This may be achieved by falling back to the first BW chunk, e.g. periodically or when detecting synchronization mismatch. Alternatively, synchronization may be maintained exclusively by processing of signals on the second BW chunk, e.g. pilot signals or dedicated synchronization signals for MMC devices or mobile transceivers.

In some embodiments, the MMC device may fall back onto the first BW chunk, e.g. in case of changes of system parameters. This can be triggered by respective control signaling on the second BW chunk by the base station transceiver apparatus 20, e.g. a control message sending a group of one or more MMC devices back to the first BW chunk. In some embodiments the second BW chunk or frequency resource may have the same or different BW as the first BW chunk, and it may be on the same or on a separate component carrier. In other words, some embodiments may relate to systems using multiple carriers, e.g. a system using multiple component carriers as defined by LTE Rel. 10, and the first and second frequency resources may use different carriers. For example, in case of multicarrier systems similar to OFDM, the DL transmitter would use a full-length IFFT over the full system BW, while the receiver of the MMC device would use a reduced length FFT over either the first or second BW chunk or frequency resource. In other words, the receiver module 12 of the mobile transceiver apparatus 10 is then operable to receive an orthogonally frequency division multiplexed radio signal from the base station transceiver 200. The control module 14 of the mobile transceiver apparatus 10 is then operable to apply a frequency transformation to the radio signal, wherein a range of the frequency transformation is reduced when receiving a signal on the second frequency resource as compared to a signal received on the first frequency resource.

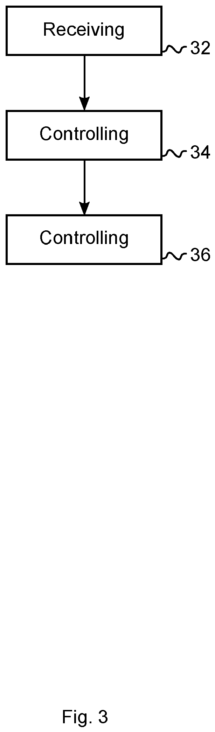

Fig. 3 shows a block diagram of a flow chart of an embodiment of a method for a mobile transceiver 100 which is operable to receive data from a base station transceiver 200 of a mobile communication system 300. The method comprises receiving 32 radio signals from the base station transceiver 200 and controlling 34 to receive a system parameter of the mobile communication system 300 and a synchronization signal on a first frequency resource, and to receive a data signal and a reference signal on a second frequency resource. The method further comprises controlling 36 to receive signals on the first frequency resource discontinuously.

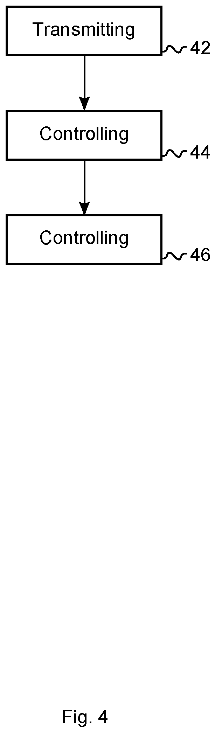

Fig. 4 shows a block diagram of a flow chart of an embodiment of a method for a base station transceiver 200 which is operable to transmit data from the base station transceiver 200 to a mobile transceiver 100 of a mobile communication system 300. The method comprises transmitting 42 radio signals from the base station transceiver 200 to the mobile transceiver 100 and controlling 44 to transmit a system parameter of the mobile communication system and a synchronization signal for the mobile transceiver 100 on a first frequency resource, and to transmit data and a dedicated control signal for the mobile transceiver 100 on a second frequency resource such that data transmission to the mobile transceiver 100 can be maintained without the first frequency resource. The method further comprises controlling 46 to transmit, on the second frequency resource, information related to control data to be transmitted on the first frequency resource, and to transmit the control data on the first frequency resource.

Embodiments further provide computer programs or a computer program product having a program code for performing anyone of the above described methods, when the computer program or computer program product is executed on a processor, computer, or programmable hardware.

Embodiments may enable to reduce the cost of MMC devices, while carrying broadband data and MMC traffic over the same broadband mobile communications system. Embodiments may further enable a high capacity for MMC DL traffic, enabling the widespread use of sensors and actuators in applications like smart cities, connected homes or m-health, while keeping the overhead for system information broadcast low, e.g. only needed in the first BW chunk.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention according to the appended claims. Furthermore, all examples recited herein are principally intended expressly to be only for pedagogical purposes to aid the reader in understanding the principles of the invention according to the appended claims.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for receiving", "means for transmitting", etc., may be provided through the use of dedicated hardware, such as "a controller", "a receiver", "a transmitter" etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

The term "operable to" as used herein may indicate that a certain component may be operated to carried out a respective function. The term "operable to" may as well be replaced by one of the terms "configured to" or "adapted to".

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. An apparatus (10) for a mobile transceiver (100) operable to receive data from a base station transceiver (200) of a mobile communication system (300), the apparatus (10) comprising
a receiver module (12) operable to receive radio signals from the base station transceiver (200); and
a control module (14) operable to control the receiver module (12), wherein the control module (14) is operable to configure the receiver module (12) to receive a system parameter of the mobile communication system (300) and a synchronization signal on a first frequency resource, and wherein the control module (14) is operable to configure the receiver module (12) to receive a data signal and a reference signal on a second frequency resource, wherein the control module (14) is operable to control the receiver module (12) to receive signals on the first frequency resource discontinuously, wherein the control module (14) is operable to control the receiver module (12) to receive, on the second frequency resource, information related to control data to be received on the first frequency resource, wherein the control module (14) is operable to configure the receiver module (12) to receive the control data on the first frequency resource.

2. The apparatus (10) of claim 1, wherein the apparatus (10) further comprises a transmitter module (16) and wherein control module (14) is operable to provide information on a frequency resource it is synchronized to, using the transmitter module (16), to the base station transceiver (200).

3. The apparatus (10) of claim 1, wherein the first frequency resource and the second frequency resource correspond to different sub-bands of a system bandwidth of the mobile communication system (300), wherein the first frequency resource comprises a higher bandwidth than the second frequency resource, and/or wherein the first frequency resource is centered on a carrier frequency of the base station transceiver (200).

4. The apparatus (10) of claim 1, wherein the control module (14) is operable to perform cell search and downlink synchronization using signals received on the first frequency resource and/or wherein the control module (14) is operable to obtain data communicated on a broadcast channel or a system information broadcast of the mobile communication system (300) using signals received on the first frequency resource.

5. The apparatus (10) of claim 1, wherein the control module (14) is operable to receive information related to the second frequency resource using the first frequency resource, and/or wherein the control module (14) is operable to stop the receiver module (12) from receiving signals on the first frequency resource after synchronization with the base station transceiver (200) is achieved.

6. The apparatus (10) of claim 1, wherein the control module (14) is operable to achieve synchronization with the base station transceiver (200) using the first frequency resource, and wherein the control module (14) is operable to maintain synchronization using signals received on the first or the second frequency resource.

7. The apparatus (10) of claim 1, wherein the receiver module (12) is operable to receive an orthogonally frequency division multiplexed radio signal from the base station transceiver (200), and wherein the control module (14) is operable to apply a frequency transformation to the radio signal, wherein a range of the frequency transformation is reduced when receiving a signal on the second frequency resource as compared to a signal received on the first frequency resource.

8. An apparatus (20) for a base station transceiver (200) operable to transmit data from the base station transceiver (200) to a mobile transceiver (100) of a mobile communication system (300), the apparatus (20) comprising
a transmitter module (22) operable to transmit radio signals from the base station transceiver (200) to the mobile transceiver (100); and
a control module (24) operable to control the transmitter module (22), wherein the control module (24) is operable to configure the transmitter module (22) to transmit a system parameter of the mobile communication system (300) and a synchronization signal for the mobile transceiver (100) on a first frequency resource, and wherein the control module (24) is operable to configure the transmitter module (12) to transmit data and a dedicated control signal for the mobile transceiver (100) on a second frequency resource such that data transmission to the mobile transceiver (100) can be maintained without the first frequency resource, and wherein the control module (24) is operable to transmit, on the second frequency resource, information related to control data to be transmitted on the first frequency resource, and wherein the control module (24) is operable to configure the transmitter module (22) to transmit the control data on the first frequency resource.

9. The apparatus (20) of claim 8, further comprising a receiver module (26) and wherein the control module (24) is operable to receive information on a frequency resource the mobile transceiver (100) is synchronized to from the mobile transceiver (100) using the receiver module (26).

10. The apparatus (20) of claim 8, wherein the first frequency resource and the second frequency resource correspond to different sub-bands of a system bandwidth of the mobile communication system (300), and/or wherein the first frequency resource comprises a higher bandwidth than the second frequency resource.

11. The apparatus (20) of claim 8, wherein the control module (24) is operable to transmit information related to the second frequency resource using the first frequency resource.

12. The apparatus (20) of claim 8, wherein the first frequency resource is centered on a carrier frequency of the base station transceiver (200).

13. A method for a mobile transceiver (100) operable to receive data from a base station transceiver (200) of a mobile communication system (300), the method comprising
Receiving (32) radio signals from the base station transceiver (200);
Controlling (34) to receive a system parameter of the mobile communication system (300) and a synchronization signal on a first frequency resource and to receive a data signal and a reference signal on a second frequency resource; and Controlling (36) to receive signals on the first frequency resource discontinuously, Controlling to receive, on the second frequency resource, information related to control data to be received on the first frequency resource; and Controlling to receive the control data on the first frequency resource.

14. A method for a base station transceiver (200) operable to transmit data from the base station transceiver (200) to a mobile transceiver (100) of a mobile communication system (300), the method comprising
Transmitting (42) radio signals from the base station transceiver (200) to the mobile transceiver (100);
Controlling (44) to transmit a system parameter of the mobile communication system (300) and a synchronization signal for the mobile transceiver (100) on a first frequency resource and to transmit data and a dedicated control signal for the mobile transceiver (100) on a second frequency resource such that data transmission to the mobile transceiver (100) can be maintained without the first frequency resource; and
Controlling (46) to transmit, on the second frequency resource, information related to control data to be transmitted on the first frequency resource, and to transmit the control data on the first frequency resource.

15. A computer program having a program code for performing one of the methods of claims 13 or 14, when the computer program is executed on a computer or processor.

## Patentansprüche

1. Vorrichtung (10) für einen mobilen Transceiver (100), betreibbar zum Empfangen von Daten von einem Basisstation-Transceiver (200) eines mobilen Kommunikationssystems (300), wobei die Vorrichtung (10) umfasst ein Empfängermodul (12), das betreibbar ist zum Empfangen von Funksignalen von dem Basisstation-Transceiver (200); und
ein Steuermodul (14), das betreibbar ist zum Steuern des Empfängermoduls (12), wobei das Steuermodul (14) betreibbar ist zum Konfigurieren des Empfängermoduls (12) zum Empfangen eines Systemparameters des mobilen Kommunikationssystems (300) und eines Synchronisationssignals an einer ersten Frequenzressource und wobei das Steuermodul (14) betreibbar ist zum Konfigurieren des Empfängermoduls (12) zum Empfangen eines Datensignals und eines Referenzsignals an einer zweiten Frequenzressource, wobei das Steuermodul (14) betreibbar ist zum Steuern des Empfängermoduls (12) zum diskontinuierlichen Empfangen von Signalen an der ersten Frequenzressource, wobei das Steuermodul (14) betreibbar ist zum Steuern des Empfängermoduls (12) zum Empfangen, an der zweiten Frequenzressource, von Information, die mit Steuerdaten verbunden ist, die an der ersten Frequenzressource empfangen werden sollen, wobei das Steuermodul (14) betreibbar ist zum Konfigurieren des Empfängermoduls (12) zum Empfangen der Steuerdaten an der ersten Frequenzressource.

2. Vorrichtung (10) nach Anspruch 1, wobei die Vorrichtung (10) weiterhin umfasst ein Sendermodul (16) und wobei das Steuermodul (14) betreibbar ist zum Bereitstellen von Information über eine Frequenzressource, mit der es synchronisiert ist, unter Verwenden des Sendermoduls (16), für den Basisstation-Transceiver (200).

3. Vorrichtung (10) nach Anspruch 1, wobei die erste Frequenzressource und die zweite Frequenzressource unterschiedlichen Unterbändern einer Systembandbreite des mobilen Kommunikationssystems (300) entsprechen, wobei die erste Frequenzressource eine höhere Bandbreite umfasst als die zweite Frequenzressource, und/oder wobei die erste Frequenzressource auf einer Trägerfrequenz des Basisstation-Transceivers (200) zentriert ist.

4. Vorrichtung (10) nach Anspruch 1, wobei das Steuermodul (14) betreibbar ist zum Durchführen von Zellsuche und Downlink-Synchronisation unter Verwenden der an der ersten Frequenzressource empfangenen Signale und/oder wobei das Steuermodul (14) betreibbar ist zum Erhalten von Daten, welche auf einem Broadcast-Kanal oder einem Systeminformation-Broadcast des mobilen Kommunikationssystems (300) mitgeteilt worden sind unter Verwenden von Signalen, die an der ersten Frequenzressource empfangen worden sind.

5. Vorrichtung (10) nach Anspruch 1, wobei das Steuermodul (14) betreibbar ist zum Empfangen von Information, die verbunden ist mit der zweiten Frequenzressource unter Verwenden der ersten Frequenzressource und/oder wobei das Steuermodul (14) betreibbar ist zum Stoppen des Empfangens von Signalen an der ersten Frequenzressource des Empfangsmoduls (12), nachdem die Synchronisation mit dem Basisstation-Transceiver (200) erzielt worden ist.

6. Vorrichtung (10) nach Anspruch 1, wobei das Steuermodul (14) betreibbar ist zum Erzielen der Synchronisation mit dem Basisstation-Transceiver (200) unter Verwenden der ersten Frequenzressource und wobei das Steuermodul (14) betreibbar ist zum Erhalten der Synchronisation unter Verwenden von Signalen, die an der ersten oder der zweiten Frequenzressource empfangen worden sind.

7. Vorrichtung (10) nach Anspruch 1, wobei das Empfangsmodul (12) betreibbar ist zum Empfangen eines orthogonalen Frequenzmultiplex-Funksignals von dem Basisstation-Transceiver (200) und wobei das Steuermodul (14) betreibbar ist zum Anwenden einer Frequenztransformation auf das Funksignal, wobei ein Bereich der Frequenztransformation reduziert wird, wenn ein Signal an der zweiten Frequenzressource empfangen wird im Vergleich mit einem Signal, das empfangen wird an der ersten Frequenzressource.

8. Vorrichtung (20) für einen Basisstation-Transceiver (200), betreibbar zum Übertragen von Daten von dem Basisstation-Transceiver (200) auf einen mobilen Transceiver (100) eines mobilen Kommunikationssystems (300), wobei die Vorrichtung (20) umfasst
ein Sendermodul (22), das betreibbar ist zum Übertragen von Funksignalen von dem Basisstation-Transceiver (200) auf den mobilen Transceiver (100); und
ein Steuermodul (24), das betreibbar ist zum Steuern des Sendermoduls (22), wobei das Steuermodul (24) betreibbar ist zum Konfigurieren des Sendermoduls (22) zum Übertragen eines Systemparameters des mobilen Kommunikationssystems (300) und eines Synchronisationssignals für den mobilen Transceiver (100) an einer ersten Frequenzressource und wobei das Steuermodul (24) betreibbar ist zum Konfigurieren des Sendermoduls (12) zum Übertragen von Daten und eines dedizierten Steuersignals für den mobilen Transceiver (100) an einer zweiten Frequenzressource, sodass die Datenübertragung auf den mobilen Transceiver (100) Beibehalten werden kann ohne die erste Frequenzressource und wobei das Steuermodul (24) betreibbar ist zum Übertragen, an der zweiten Frequenzressource, von Information, die verbunden ist mit zu übertragenden Steuerdaten an der ersten Frequenzressource, und wobei das Steuermodul (24) betreibbar ist zum Konfigurieren des Sendermoduls (22) zum Übertragen der Steuerdaten an der ersten Frequenzressource.

9. Vorrichtung (20) nach Anspruch 8, weiterhin umfassend ein Empfängermodul (26) und wobei das Steuermodul (24) betreibbar ist zum Empfangen von Information über eine Frequenzressource, mit der der mobile Transceiver (100) synchronisiert ist, von dem mobilen Transceiver (100) unter Verwenden des Empfängermoduls (26).

10. Vorrichtung (20) nach Anspruch 8, wobei die erste Frequenzressource und die zweite Frequenzressource unterschiedlichen Unterbändern einer Systembandbreite des mobilen Kommunikationssystems (300) entsprechen, und/oder wobei die erste Frequenzressource eine höhere Bandbreite umfasst als die zweite Frequenzressource.

11. Vorrichtung (20) nach Anspruch 8, wobei das Steuermodul (24) betreibbar ist zum Übertragen von Information, die mit der zweiten Frequenzressource verbunden ist, unter Verwenden der ersten Frequenzressource.

12. Vorrichtung (20) nach Anspruch 8, wobei die erste Frequenzressource auf einer Trägerfrequenz des Basisstation-Transceivers (200) zentriert ist.

13. Verfahren für einen mobilen Transceiver (100), der betreibbar ist zum Empfangen von Daten von einem Basisstation-Transceiver (200) eines mobilen Kommunikationssystems (300), wobei das Verfahren umfasst Empfangen (32) von Funksignalen von dem Basisstation-Transceiver (200);
Steuern (34) zum Empfangen eines Systemparameters des mobilen Kommunikationssystems (300) und eines Synchronisationssignals an einer ersten Frequenzressource und zum Empfangen eines Datensignals und eines Referenzsignals an einer zweiten Frequenzressource; und
Steuern (36) zum diskontinuierlichen Empfangen von Signalen an der ersten Frequenzressource,
Steuern zum Empfangen, an der zweiten Frequenzressource, von Information, die verbunden ist mit Steuerdaten, die an der ersten Frequenzressource empfangen werden müssen; und
Steuern zum Empfangen der Steuerdaten an der ersten Frequenzressource.

14. Verfahren für einen Basisstation-Transceiver (200), der betreibbar zum Übertragen von Daten von dem Basisstation-Transceiver (200) auf einen mobilen Transceiver (100) eines mobilen Kommunikationssystems (300), wobei das Verfahren umfasst Übertragen (42) von Funksignalen von dem Basisstation-Transceiver (200) auf den mobilen Transceiver (100);
Steuern (44) zum Übertragen eines Systemparameters des mobilen Kommunikationssystems (300) und eines Synchronisationssignals für den mobilen Transceiver (100) an einer ersten Frequenzressource und zum Übertragen von Daten und eines dedizierten Steuersignals für den mobilen Transceiver (100) an einer zweiten Frequenzressource, sodass die Datenübertragung auf den mobilen Transceiver (100) beibehalten werden kann ohne die erste Frequenzressource;
und
Steuern (46) zum Übertragen, an der zweiten Frequenzressource, von Information, die verbunden ist mit Steuerdaten, die an der ersten Frequenzressource übertragen werden müssen, und zum Übertragen der Steuerdaten an der ersten Frequenzressource.

15. Computerprogramm mit einem Programmcode zum Durchführen eines der Verfahren nach dem Anspruch 13 oder 14, wenn das Computerprogramm auf einem Computer oder Prozessor ausgeführt wird.

## Revendications

1. Appareil (10) destiné à un émetteur-récepteur mobile (100) permettant de recevoir des données en provenance d'un émetteur-récepteur de station de base (200) d'un système de communication mobile (300), l'appareil (10) comprenant :
un module récepteur (12) permettant de recevoir des signaux radio en provenance de l'émetteur-récepteur de station de base (200) ; et
un module de commande (14) permettant de commander le module récepteur (12), dans lequel le module de commande (14) permet de configurer le module récepteur (12) afin qu'il reçoive un paramètre système du système de communication mobile (300) et un signal de synchronisation sur une première ressource de fréquence, et dans lequel le module de commande (14) permet de configurer le module récepteur (12) afin qu'il reçoive un signal de données et un signal de référence sur une deuxième ressource de fréquence, dans lequel le module de commande (14) permet de commander le module récepteur (12) afin qu'il reçoive des signaux sur la première ressource de fréquence de manière discontinue, dans lequel le module de commande (14) permet de commander le module récepteur (12) afin qu'il reçoive, sur la deuxième ressource de fréquence, des informations relatives aux données de commande à recevoir sur la première ressource de fréquence, dans lequel le module de commande (14) permet de configurer le module récepteur (12) afin qu'il reçoive les données de commande sur la première ressource de fréquence.

2. Appareil (10) selon la revendication 1, dans lequel l'appareil (10) comprend en outre un module émetteur (16) et dans lequel le module de commande (14) permet de fournir des informations sur une ressource de fréquence avec laquelle il est synchronisé, à l'aide du module émetteur (16), à l'émetteur-récepteur de station de base (200).

3. Appareil (10) selon la revendication 1, dans lequel la première ressource de fréquence et la deuxième ressource de fréquence correspondent à des sous-bandes différentes de la bande passante système du système de communication mobile (300), dans lequel la première ressource de fréquence comporte une bande passante plus large que la deuxième ressource de fréquence, et/ou dans lequel la première ressource de fréquence est centrée sur une fréquence porteuse de l'émetteur-récepteur de station de base (200).

4. Appareil (10) selon la revendication 1, dans lequel le module de commande (14) permet de réaliser une recherche de cellule et une synchronisation sur liaison descendante à l'aide de signaux reçus sur la première ressource de fréquence et/ou dans lequel le module de commande (14) permet d'obtenir des données communiquées sur un canal de diffusion ou une diffusion d'informations système du système de communication mobile (300) à l'aide de signaux reçus sur la première ressource de fréquence.

5. Appareil (10) selon la revendication 1, dans lequel le module de commande (14) permet de recevoir des informations relatives à la deuxième ressource de fréquence à l'aide de la première ressource de fréquence, et/ou dans lequel le module de commande (14) permet d'arrêter la réception de signaux par le module récepteur (12) sur la première ressource de fréquence après la fin de la synchronisation avec l'émetteur-récepteur de station de base (200).

6. Appareil (10) selon la revendication 1, dans lequel le module de commande (14) permet de réaliser la synchronisation avec l'émetteur-récepteur de station de base (200) à l'aide de la première ressource de fréquence, et dans lequel le module de commande (14) permet de maintenir la synchronisation à l'aide de signaux reçus sur la première ou la deuxième ressource de fréquence.

7. Appareil (10) selon la revendication 1, dans lequel le module récepteur (12) permet de recevoir un signal radio à multiplexage par répartition orthogonale de la fréquence en provenance de l'émetteur-récepteur de station de base (200), et dans lequel le module de commande (14) permet d'appliquer une transformation de fréquence au signal radio, dans lequel la plage de la transformation de fréquence est réduite lors de la réception d'un signal sur la deuxième ressource de fréquence par rapport à la réception d'un signal sur la première ressource de fréquence.

8. Appareil (20) destiné à un émetteur-récepteur de station de base (200) permettant de transmettre des données de l'émetteur-récepteur de station de base (200) à un émetteur-récepteur mobile (100) d'un système de communication mobile (300), l'appareil (20) comprenant :
un module émetteur (22) permettant de transmettre des signaux radio de l'émetteur-récepteur de station de base (200) à l'émetteur-récepteur mobile (100) ; et
un module de commande (24) permettant de commander le module émetteur (22),
dans lequel le module de commande (24) permet de configurer le module émetteur (22) afin qu'il transmette un paramètre système du système de communication mobile (300) et un signal de synchronisation destiné à l'émetteur-récepteur mobile (100) sur une première ressource de fréquence, et dans lequel le module de commande (24) permet de configurer le module émetteur (12) afin qu'il transmette des données et un signal de commande dédié destiné à l'émetteur-récepteur mobile (100) sur une deuxième ressource de fréquence de sorte que la transmission de données vers l'émetteur-récepteur mobile (100) puisse être maintenue sans la première ressource de fréquence, et dans lequel le module de commande (24) permet de transmettre, sur la deuxième ressource de fréquence, des informations relatives aux données de commande à transmettre sur la première ressource de fréquence, et dans lequel le module de commande (24) permet de configurer le module émetteur (22) afin qu'il transmette les données de commande sur la première ressource de fréquence.

9. Appareil (20) selon la revendication 8, comprenant en outre un module récepteur (26) et dans lequel le module de commande (24) permet de recevoir des informations sur une ressource de fréquence avec laquelle le module émetteur-récepteur (100) est synchronisé en provenance de l'émetteur-récepteur mobile (100) à l'aide du module récepteur (26).

10. Appareil (20) selon la revendication 8, dans lequel la première ressource de fréquence et la deuxième ressource de fréquence correspondent à des sous-bandes différentes de la bande passante système du système de communication mobile (300), et dans lequel la première ressource de fréquence comporte une bande passante plus large que la deuxième ressource de fréquence.

11. Appareil (20) selon la revendication 8, dans lequel le module de commande (24) permet de transmettre des informations relatives à la deuxième ressource de fréquence à l'aide de la première ressource de fréquence.

12. Appareil (20) selon la revendication 8, dans lequel la première ressource de fréquence est centrée sur une fréquence porteuse de l'émetteur-récepteur de station de base (200).

13. Procédé destiné à un émetteur-récepteur mobile (100) permettant de recevoir des données en provenance d'un émetteur-récepteur de station de base (200) d'un système de communication mobile (300), le procédé comprenant les étapes suivantes :
recevoir (32) des signaux radio en provenance de l'émetteur-récepteur de station de base (200) ;
commander (34) la réception d'un paramètre système du système de communication mobile (300) et d'un signal de synchronisation sur une première ressource de fréquence et la réception d'un signal de données et d'un signal de référence sur une deuxième ressource de fréquence ; et
commander (36) la réception de signaux sur la première ressource de fréquence de manière discontinue ;
commander la réception, sur la deuxième ressource de fréquence, d'informations relatives aux données de commande à recevoir sur la première ressource de fréquence ; et
commander la réception des données de commande sur la première ressource de fréquence.

14. Procédé destiné à un émetteur-récepteur de station de base (200) permettant de transmettre des données de l'émetteur-récepteur de station de base (200) à un émetteur-récepteur mobile (100) d'un système de communication mobile (300), le procédé comprenant les étapes suivantes :
transmettre (42) des signaux radio de l'émetteur-récepteur de station de base (200) à l'émetteur-récepteur mobile (100) ;
commander (44) la transmission d'un paramètre système du système de communication mobile (300) et d'un signal de synchronisation destiné à l'émetteur-récepteur mobile (100) sur une première ressource de fréquence et la transmission de données et d'un signal de commande dédié destiné à l'émetteur-récepteur mobile (100) sur une deuxième ressource de fréquence de sorte que la transmission de données vers l'émetteur-récepteur mobile (100) puisse être maintenue sans la première ressource de fréquence ; et
commander (46) la transmission, sur la deuxième ressource de fréquence, d'informations relatives aux données de commande à transmettre sur la première ressource de fréquence, et la transmission des données de commande sur la première ressource de fréquence.

15. Programme informatique disposant d'un code de programme destiné à mettre en oeuvre l'un des procédés des revendications 13 ou 14, lorsque le programme informatique est exécuté sur un ordinateur ou un processeur.
